# EUROPEAN PATENT APPLICATION

(11) **EP 4 751 990 A1**
(43) Date of publication of application: **03.06.2026**
(21) Application number: 24216270.9
(22) Date of filing: 28.11.2024
(51) Int. Cl.: B60L 58/13, B60L 58/14

(54) **METHOD FOR CONTROLLING ENERGY CONSUMPTION OF AN ELECTRIC VEHICLE DURING AN IDLE STATE**

(71) Applicant: Volvo Car Corporation, 405 31 Göteborg (SE)
(72) Inventor: HALLDIN, Morgan, 40531 Göteborg (SE); HERMANSON, Jesper, 40531 Göteborg (SE)
(74) Representative: Kransell & Wennborg KB

(57) **Abstract**

The disclosure relates to a method (100) for controlling energy consumption of an electric vehicle (10) during an idle state of the electric vehicle (10), the method (100) comprising:
- obtaining idle state data indicative of the electric vehicle (10) being in an idle state; wherein, if the electric vehicle (10) is in an idle state, the method (100) further comprises:
- providing a plurality of options (1) for user selection, each one of the options (1) being indicative of one or more settings (2) for controlling energy consumption of the electric vehicle (10) during the idle state;
- obtaining a user selection of one of the provided options (1); and
- providing control data for controlling the energy consumption of the electric vehicle (10) based on the user selection.

## Description

### TECHNICAL FIELD

The present disclosure relates to a method for controlling energy consumption of an electric vehicle during an idle state of the electric vehicle, a computer program product, a data processing system, and an electric vehicle comprising the data processing system.

### BACKGROUND

Electric vehicles have a bad reputation for some critical situations. An example of such a critical situation is when the passengers are stuck in the electric vehicle for some time. For example, when stuck in a vehicle due a traffic jam in winter conditions, vehicles equipped with internal combustion engines, ICE, can be idle for a long time with low fuel consumption to maintain a comfortable cabin climate and offer other functions that require energy.

However, electric vehicles are typically perceived to perform worse in such situations. This can be partly true. For example, at - 10°C outside temperature, a typical ICE vehicle may consume approx. one liter of gasoline per hour during an idle state to heat the cabin and may have a 50-liter tank. A typical electric vehicle, on the other hand, may consume three kW of energy per hour to heat the cabin and have a battery capacity of 70 kWh. For such typical vehicles, an ICE vehicle with full tank can last 60 hours while a fully charged electric vehicle can last 23 hours at the exemplary outside temperature. Due to this discrepancy, it is desirable to enable electric vehicles to handle such critical situations and affirm the drivers of electric vehicles in such situations.

### SUMMARY

The problem described above is at least partially solved or alleviated by the subject matter of the independent claims of the present disclosure, wherein further examples are incorporated in the dependent claims.

According to a first aspect, there is provided a method for controlling energy consumption of an electric vehicle during an idle state of the electric vehicle, the method comprising:
- obtaining idle state data indicative of the electric vehicle being in an idle state;
wherein, if the electric vehicle is in an idle state, the method further comprises:
- providing a plurality of options for user selection, each one of the options being indicative of one or more settings for controlling energy consumption of the electric vehicle during the idle state;
- obtaining a user selection of one of the provided options; and
- providing control data for controlling the energy consumption of the electric vehicle based on the user selection.

Accordingly, the method may solve the above problem in that it provides a plurality of options for selection by a user, in particular any occupant such as driver, of the electric vehicle in response to the electric vehicle being in an idle state. Each one of these options is indicative of one or more settings to control the energy consumption of the electric vehicle during the idle state. Thereby, the user of the electric vehicle may be prompted with options to control the energy consumption in view of a determined idle state. Thus, the vehicle not only recognizes the idle state but also gives the user of the vehicle several options to deal with the idle state, e.g., during a critical situation such as a traffic jam in winter conditions as described above. Each option is associated with one or more settings for controlling the energy consumption of the electric vehicle. Hence, the options may also be referred to herein as settings options. The provision of the options based on the determined idle state can ensure that the user of the electric vehicle takes appropriate measures to control the energy consumption in view of the idle state, and further in particular in view of the available energy or charge of the vehicle battery and/or the current energy consumption. Thereby, the user is enabled to take reasoned control of the energy consumption. This reaffirms the user that the electric vehicle intelligently assists them during a critical situation.

Advantageously, the proposed solution does not require that users themselves recognize a potential critical situation. Also, it does not require users to take any steps on their own, e.g., to adjust vehicle settings at their own initiative. This is important because a user may not realize a critical situation and/or not take any or a required measure in the given situation, potentially leading to a breakdown of the electric vehicle without energy to heat the cabin and putting the occupants at avoidable risk. Specifically, this may be the case when the battery of the electric vehicle has a low charge and experiences a high energy consumption during a prolonged idle state, potentially not lasting the entire duration of the critical situation until the vehicle can reach an electric charging station. Also, the present solution does not put burden on the user to manipulate any settings which they might think would control the energy consumption in a manner that is adequate in view of the idle state. This may prevent unnecessary or overly restrictive settings of the user such as completely turning off heating during low outside temperatures. Instead, sensible options can be proposed in response to obtaining the idle state data.

Generally, the idle state of the electric vehicle may be defined by no or limited supply of torque output from one or more electric motors of the electric vehicle to drive the vehicle, i.e., to be provided as propulsion energy directed to a drive mechanism or wheels of the electric vehicle. Instead, during the idle state of the electric vehicle, an energy storage system, in particular one or more batteries, of the electric vehicle may supply mostly or only the power necessary for auxiliary systems or idle functions. Such systems or functions may include or relate to a climate control or air-conditioning system, a multimedia system, and similar, which may be providing vehicle functions independent from the driving of the electric vehicle. The idle state may be determined by any one or more systems of the vehicle. For example, such system may be a drive system of the vehicle, which may be indicating that no propulsion energy is provided to drive the vehicle. From this, it may be obtained that the electric vehicle must be in an idle state. Alternatively, or additionally, torque data from one or more electric motors and/or location data of a geo-positioning system of the vehicle may be indicating that the electric vehicle is in an idle state. Also, any other type of system of the electric vehicle and information therefrom may be used, which can indicate the idle state of the electric vehicle.

The plurality of options is herein to be understood as two or more options to be user selected, wherein the options are indicative of or comprise one or more settings, in particular two, three or more settings. In other words, an option can also be referred to as a set of settings or a settings set. The plurality of options for user selection with its one or more settings may for example be predefined for any idle state, for certain idle states, e.g., certain durations of idle states, certain locations, certain outside conditions (e.g., temperatures or other ambient conditions) and/or determined individually in each instance. For example, the plurality of options may be provided on a multimedia system, e.g., displayed within a display screen on a display inside the vehicle cabin. The options may be selectable by touch interaction on the display itself and/or through any control elements functionally coupled with the display to receive user inputs. Accordingly, the user is provided with the ability to select one option out of the plurality of options to be used to control energy consumption. For this, the user needs to provide a user input on any user interface such as a touch display, one or more control elements or any other user interface of the vehicle, e.g., a voice interface to receive voice commands of the user.

After the user selection is received based on user input on one or more user interfaces of the electric vehicle, control data may be provided for controlling the energy consumption of the electric vehicle. This control data may be predefined for the plurality of options or determined individually. In case of predefined control data, the control data may be provided out of different predefined control data, which corresponds to the user-selected option. Also, it may be provided that the user may manipulate the options after or during their selection. In this case, predefined control data may be adjusted accordingly or determined individually based on the actual settings that the user has set by selection of the option and a potential manipulation or adjustment thereof.

The electric vehicle may be a battery electric vehicle. It may comprise at least one battery and at least one electric motor connected to the battery for receiving power therefrom and for driving the electric vehicle. The electric vehicle may comprise partial autonomic driving capabilities, e.g., lane-keeping assistant and cruise control, or full autonomic driving capabilities, with which the electric vehicle is capable to arrive at the navigation destination without requiring controlling of the electric vehicle by a human driver.

The method may be at least partly computer-implemented, which means that one, multiple or all the steps of the method may be carried out by a computer. The method may further be implemented in software or in hardware, or in software and hardware. Further, the method may be carried out by computer program instructions running on means that provide data processing functions. The data processing means may be a suitable computing means, such as an electronic control module, which may also be a distributed computer system. The data processing means or the computer, respectively, may comprise one or more of a processor, a memory, a data interface, etc.

In an example, each one of the options may be indicative of a combination of two or more settings for controlling energy consumption of the electric vehicle during the idle state, wherein at least one of two or more settings is different in each one of the options. In other words, the options may be indicative or comprise two or more settings to control the energy consumption of the electric vehicle during the idle state. In each one of the plurality of options, there is at least one setting that is different from at least one setting in each one of the other options. Consequently, options are provided for user selection that are different in terms of at least one setting such that the user can be given a choice for controlling the energy consumption. The settings may be different by relating to different systems of the electric vehicle, for which these settings are to be used and/or by imposing different operating states onto the respective system of the vehicle. For example, when the settings limit the comfort of the user or generally the occupants inside the vehicle by limiting the air-conditioning, deactivating partially or fully multimedia options, seat heaters, or similar, the user may make a choice which of these comfort functions they value less during the idle state to save energy.

In an example, each one of the options may be indicative of a combination of three or more settings for controlling energy consumption of the electric vehicle during the idle state, wherein at least one of the three or more settings is different in each one of the options. Also, two of the three or more settings may be different in each one of the options. Thereby, the options can deviate even more in their settings and hence give the user a broader control range for controlling the energy consumption. Specifically, different options may be proposed to the user reflecting different preferences for using the auxiliary systems of the vehicle. The options make the choice for the user easier, reflecting different preferences users may generally have and generally not requiring the user to dive deep into the various particulars of the settings unless they wish to do so.

In an example, if the electric vehicle is not in an idle state, the method may further comprise providing individual settings for controlling energy consumption of the electric vehicle. Opposed to the plurality of options indicating one or more settings in the idle state, the method uses individual settings, which may have been or be set by a user on an individual basis during or before driving. Accordingly, if the vehicle is not in the idle state, the energy consumption may be controlled based on the individual settings of the user and if the vehicle is in the idle state, the energy consumption may be controlled based on the user-selected option out of the plurality of options, which may in particular be predefined as opposed to individually set.

In an example, each one of the options may be further indicative of a time and/or battery charge the electric vehicle may remain in the idle state when using the one or more settings and reach a charging station for recharging the electric vehicle. In particular, each one of the options may comprise an indication of the time and/or battery charge. For example, such indication may be displayed on a vehicle display inside the vehicle cabin to the vehicle during the selection process or as part of the provision of the options for user selection. The user may derive therefrom the effect that a particular option would have and, according to their own preference or risk affinity, select an option that suits them well with respect to cabin comfort and likelihood of reaching the charging station without breaking down. The time and/or battery charge may be determined based on a current state of charge of the energy storage of the electric vehicle, a current or estimated energy consumption depending on the selected option, and geo-positional data from a global positioning system, GPS, and/or a navigation system of the vehicle indicating the current position of the electric vehicle with respect to the nearest charging stations.

In an example, the one or more settings of at least the user selected option may be adjustable by the user and the time and/or battery charge indicated by the user selected option may be automatically adjusted based on a user adjustment of the one or more settings. In particular, all options and/or all settings of each one of the options may be adjustable and its indication of time and/or battery charge may be automatically and/or instantly adjusted. For adjusting the one or more settings, the user may provide user input on any user interface of the vehicle as described herein. This provides the user with the possibility to individualize, the in particular predefined, options or generally the options provided in response to determining the idle state or obtaining the idle state data. Accordingly, the user is not left with few, e.g., two or three, non-customizable options. Instead, the user may adjust certain settings, which they disapprove in one of the options to arrive at an option with settings, which they prefer. Advantageously, the indication of time and/or battery charge may be instantly automatically adjusted based on such adjusted setting(s), thereby reflecting the effect of the adjustment to the user, and allowing them to consider whether they indeed want to adjust the setting(s) before selection of that option.

In an example, the one or more settings of each one of the options may relate to an operating state of one or more systems of the electric vehicle, at least one of the one or more systems being from: a climate control system, a seat heating system, or an exterior vehicle lighting system of the electric vehicle. In particular, two of the settings may be relating to an operating state of any two of the aforementioned systems. Further, in particular, each option may comprise three or more settings, wherein these settings are different from one another in that each one of these settings relates to a different one of the aforementioned systems. These systems are particularly important in terms of comfort and driving safety. But the climate control system, e.g., for air-conditioning the cabin of the electric vehicle, and the seat heating system are also large energy consumers during the idle state, which may be restricted in operation to reduce the energy consumption of the electric vehicle during the idle state. The exterior vehicle lighting system is also a large energy consumer and normally important for driving safety. However, depending on the critical situation or idle state, e.g., during traffic jam, the safety aspect of the exterior vehicle lighting may not be that important or at least it may not be required to fully utilize the exterior vehicle lighting as it would be the case during driving in the dark. Hence, there may be situations where it is sensible to reduce the overall energy consumption by restricting the operation of the exterior vehicle lighting. The herein mentioned examples of systems are non-limiting. Also, other (vehicle) systems of the electric vehicle may be restricted in their operation or other settings in the options may relate to further systems such as but not limited to a multimedia system, a window-opening system, a seat massage system, or any other vehicle system that consumes energy during idling of the electric vehicle.

In an example, the operating state of the one or more systems may be at least from one or more of: an inactive state, a restricted operation state, and an unrestricted operation state. The one or more systems may be inactive in the inactive state, operated with one or more restrictions under the restricted operation state and operated without restrictions under the unrestricted operation state. For example, if the system is the climate control system, during the inactive state, the climate control system may be completely turned off, not controlling the climate inside the cabin. In the restricted operation state, the climate control system may be operated under certain restrictions, e.g., a minimum or maximum cabin temperature, a minimum or maximum blower speed, or similar. In the unrestricted operation state, the climate control system may be operated without any restrictions. Thereby, it is possible to provide three different operating states for one or more of the systems, in particular each one of the systems, thereby allowing a predefined, easy-to-understand and customizable experience to the user during the idle state of the vehicle.

In an example, each one of the options may be based on one or more ambient conditions of the electric vehicle, the one or more ambient conditions being at least from: an ambient temperature and ambient light conditions. The ambient conditions may be determined by the electric vehicle itself or received at the electric vehicle. For example, in case of determination by the electric vehicle, the electric vehicle may comprise one or more sensors or other means that allow to measure or estimate the ambient temperature and ambient light, e.g., whether it is day or night. Alternatively, or additionally, the electric vehicle may comprise a communication module to wirelessly communicate, e.g., via cellular technology, with another object, such as a weather station, a server or generally over the Internet, to receive information about ambient temperature and/or ambient light at the location of the electric vehicle. In any case, the provided options can be sensibly predefined based on the one or more ambient conditions of the electric vehicle, thereby meeting the potentially critical situation in which the electric vehicle is during the idle state, e.g., at night-time conditions with low temperatures during a snowstorm in a traffic jam, where the provided options would look completely different than, e.g., during day-light conditions with high temperatures during a heatwave in a traffic jam.

In an example, the idling state is based on at least one or more from: a traffic jam, a breakdown, and an accident. In particular, the idle state may be indicative of a traffic jam, a breakdown, or an accident. The method may further comprise determining the type of idle state as a traffic jam, a breakdown, or an accident. For this purpose, the method may analyse any on-vehicle sensor(s) and/or information received by a wireless communication module of the electric vehicle. For example, to determine a traffic jam as an idle state, camera data from one or more exterior cameras of the vehicle may be used. Additionally, or alternatively, traffic information may be received by the wireless communication module and the position of the electric vehicle may be determined by a GPS system. Therefrom, it is possible to derive whether an idle state is caused by a traffic jam, i.e., if the electric vehicle is located where the traffic information indicates a traffic jam. To determine an accident, one or more crash sensor(s) may be analysed, for example. To determine a breakdown, one or more vehicle systems may be analysed, which could indicate that the electric vehicle has an issue preventing it from driving any further. For example, such system can be a tire pressure system, which could indicate a flat tire. Advantageously, depending on the type or cause of idle state, a duration of the idle state may be estimated. Additional information, such as the location of the vehicle, weather conditions, ambient conditions, and similar may also be considered. The provided options may depend on the estimated duration. For example, the options may be less restrictive in the case of a short, estimated duration compared to a long, estimated duration.

In an example, the climate inside a cabin of the electric vehicle may be controlled during the idle state. Specifically, one setting of the options may relate to a climate control setting of a climate control system of the electric vehicle. Further functions may be also active or controlled during the idle state, which distinguish the idle state of the vehicle from a parked state, where the occupants may have left the cabin. Specifically, the idle state may be occurring with the occupants inside and for a sudden or unforeseen situation, such as a traffic jam or breakdown, compared to a parked state, where the vehicle is intentionally parked and left by the occupants, not requiring any (further) climate control of the cabin of the electric vehicle (unless specifically desired, e.g., to heat up the cabin) and not any other comfort functions for the occupants, e.g., seat heating or multimedia functions.

In an example, the plurality of options may be provided for user input-based selection after obtaining the idle state data for a predefined time period. The time period may be predefined such that it can be assumed that the idle state is not only of a temporary duration, e.g., for a few minutes. Accordingly, the method will not trigger if the electric vehicle is only shortly in the idle state, i.e., for a duration shorter than the predefined time period.

Additionally, or alternatively, it is possible to make the triggering of the method dependent on other factors, such as the current battery charge or state of charge, SOC, a distance to the next charging station along a planned or navigated route of the electric vehicle, and similar. For example, the plurality of options may be provided if the electric vehicle is in an idle state and if the SOC of the electric vehicle is below a threshold, in particular a certain or predefined threshold. For this purpose, the method may comprise obtaining battery data indicative of the SOC and compare the SOC to the threshold.

According to a second aspect, there is provided a computer program product comprising instructions which, when the program is executed by a computer, cause the computer to carry out the method of the first aspect. The computer program product may be a computer program as such or a product, e.g., a computer readable medium, having stored the computer program thereon. The computer may be a data processing system or part thereof.

According to a third aspect, there is provided a data processing system comprising means for carrying out the method of the first aspect. The means may be a computer, e.g., include a processor and/or a computer readable medium, particularly the one described above with respect to the computer program product of the second aspect.

It is noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a schematic illustration of an electric vehicle according to an aspect of this disclosure;
- Figure 2: shows a schematic illustration of a display of a user interface of the electric vehicle; and
- Figure 3: shows a schematic illustration of a method according to an aspect of this disclosure.

### DETAILED DESCRIPTION

The Figures are merely schematic representations and serve only to illustrate examples of the disclosure. Identical or equivalent elements are in principle provided with the same reference signs.

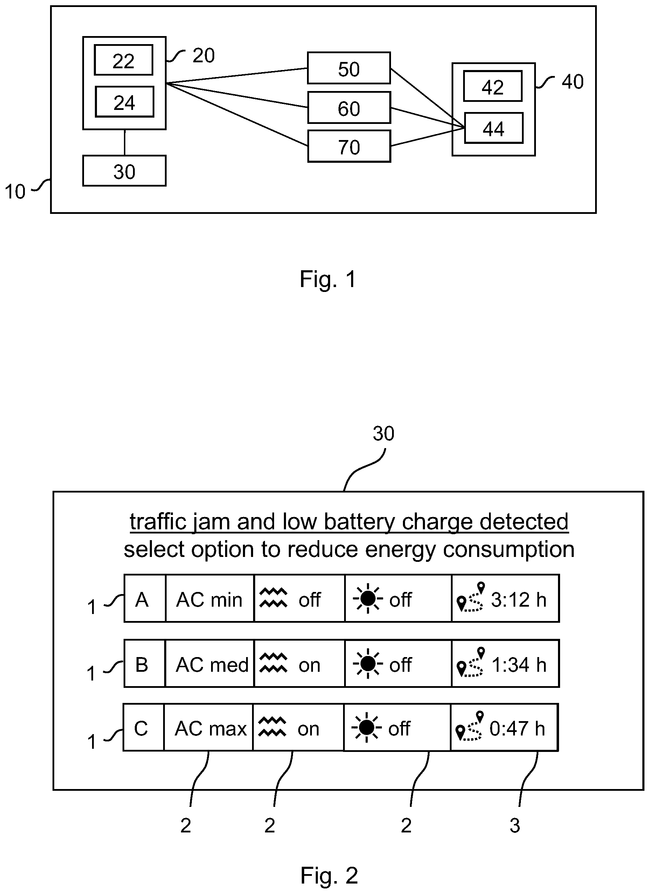

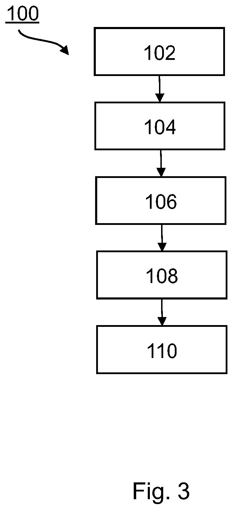

Figure 1 shows a schematic illustration of an electric vehicle 10. The electric vehicle 10 comprises a data processing system 20, which comprises a processor 22 and a computer program product 24, which may be a computer program as such or a computer-readable storage medium, on which a computer program may be stored. When the data processing system 20 executes the computer program of the computer program product 24 by virtue of its processor 22, the method 100 as schematically illustrated in Fig. 3 may be carried out.

The electric vehicle 10 further comprises a user interface 30, which may be coupled to the data processing system 20 as shown in Fig. 1. The user interface 30 may comprise any type of input means for making a user input-based selection as described further below. Such input means may be but are not limited to a touch display, control buttons, or similar.

The electric vehicle 10 of this example further comprises an electric drive system 40. The electric drive system 40 may comprise electric drive components such as an electric motor 42 and an energy storage 44, e.g., in the form of one or more batteries.

Further, the electric vehicle 10 may comprise several further systems such as but noted limited to a climate control system 50, a seat heating system 60, and an exterior vehicle lighting system 70 of the electric vehicle 1. The climate control system 50 may in particular be configured for regulating, e.g., by heating or cooling, the climate in a passenger cabin of the electric vehicle 10. The data processing system 20 is also connected to the climate control system 50 and can thereby limit at least one climate control setting, e.g., a minimum temperature setting, a maximum temperature setting and/or a blower level of the climate control system. The data processing system 20 is also connected to the seat heating system 60 for controlling heating of one or more seats inside the cabin of the electric vehicle 10. Also, the data processing system 20 is connected to the exterior vehicle lighting system 70 to control the exterior vehicle lighting of the electric vehicle 10. Exemplary, all systems 50, 60, 70 are supplied with electrical energy from the energy storage 44 as indicated by the lines connecting the energy storage 44 to the systems 50, 60, 70.

Figure 2 shows a display screen shown on a display of the electric vehicle 10. For example, the display screen may be shown on the user interface 30, which may be configured as a touch display. The shown display screen is based on the method 100 of Fig. 3.

In a step 102 of method 100 executed by the data processing system 20 of the electric vehicle 10, idle state data indicative of the electric vehicle 10 being in an idle state is obtained by the data processing system 20.

If the electric vehicle 10 is in an idle state, the method 100 proceeds with step 104 carried out by the data processing system 20, which provides a plurality of options 1 for user selection. In this example, the display screen includes text indicating that a traffic jam as reason for the idle state has been detected by the electric vehicle 10 to inform the user or driver of the electric vehicle 10. Further, in this example, it is additionally indicated on the display that the battery charge or SOC of the energy storage 44 is low, which may optionally be used as an additional trigger for step 104. Also, the display screen in this example includes a text prompt or instruction for the user to select one option to reduce energy consumption.

Exemplary, three options 1 as shown on the display screen of Fig. 2 may be provided for user selection by displaying them on the user interface 30 and providing them for user selection, e.g., through touch interaction with the user interface 30 or using any control elements such as buttons provided inside the electric vehicle 10.

Each one of the options 1 is exemplary labelled herein with a letter A, B or C to distinguish them from one another. Alternatively, these options 1 can also be given names according to their restrictions on the systems 50, 60, 70, e.g., minimum comfort or base comfort for A, medium comfort for B and maximum comfort for C.

Each one of the options 1 comprises settings 2 for controlling the energy consumption of the electric vehicle 10 during the idle state. In this example, there are three options 2 but alternatively there could be only two or more than three options 2. Also, in this example, each one of the options 1 has three settings 2 but could alternatively have less or more than three settings 2.

In a consequent step 106 of the method 100, the user may select one of the given options 1 labelled with the letters A, B and C. For the selection, the user may use the user interface 30, e.g., make a touch selection on the display or use any control button, voice command or similar for selection thereof. This user selection may be obtained in step 106 by the data processing system 20.

Then, in a consequent step 108 of method 100, the control data may be provided for controlling the energy consumption of the electric vehicle 10 based on the obtained user selection. For this purpose, the control data may be calculated based on the selected option 1 or the control data may be predefined for the different options 1 and accordingly be selected.

Then, in a step 110 of method 100, the control data may be executed by the electric vehicle 10, in particular any one or more of the systems 50, 60, 70 for controlling the energy consumption and ensuring that a charging station can be reached in case of an idle state due to, e.g., a traffic jam or similar as exemplary indicated in Fig. 2. For this purpose, the control data may be forwarded from the data processing system 20 to any one of the systems 50, 60, 70 or directly be executed by the data processing system 20 to control any one of the systems 50, 60, 70 in case the data processing system 20 acts or comprises a controller for any one of the systems 50, 60, 70.

In the example of Fig. 2, each one of the settings 2 relates to an operating state of one of the systems 50, 60, 70. Specifically, the setting 2 next to the label refers to an operating state of the climate control system 50 by referring to AC, air-conditioning. Each one of the AC settings 2 in the options 1 is different in this example. In the option 1 labelled with letter A, the AC setting 2 is "min", meaning minimum. AC min may indicate a restricted state of a setting 2 for the climate control system 50. For example, restrictions towards the minimum or maximum temperature that can be set may be applied when using option 1 with setting 2 indicating AC min. It would also be possible to have a setting 2 with AC off, meaning that the climate control system 50 is inactive when the user selects option 1 with the label A. In the option 1 labelled with letter B, the AC setting 2 is "med", meaning medium. AC med may also indicate a restricted state of a setting 2 for the climate control system 50, which however would be less restricting than AC min. In the option 1 labelled with letter C, the AC setting is "max", meaning maximum. AC max may indicate an unrestricted operation state for operating the climate control system 50.

The settings 2 next to the AC settings relate to an operating state of the seat heating system 60. Exemplary, the operating state is here indicated to be off or on or, in other words, inactive or active, as shown through the options 1 labelled A, B and C. The settings 2 next to the seat heating settings relate to an operating state of the exterior vehicle lighting system 70. Exemplary, the operating state of the settings 2 for the exterior vehicle lighting system 70 can be off or on or, in other words, inactive or active, as shown throughout the options 1 labelled A, B and C. Alternatively, the settings 2 of the systems 60, 70 could also have more than two states (off and on) like the AC settings, e.g., min, med and max.

Further, each one of the options 1 is indicated with a time 3 that the electric vehicle 10 may remain in the idle state when using the respective settings 2 of that option 1 and still reach a charging station for recharging the electric vehicle 10 along a planned travel route of the electric vehicle 10, e.g., according to navigation data.

The settings 2 may be adjustable by the user when presented with the display screen as shown in Fig. 2. For example, a user may wish to customize the option 1 labelled B to have the seat heating system 60 turned off. In this case, there may be a possibility that they can change the respective setting 2 of the seat heating to off. In this case, the estimated time 3 would be instantly and automatically updated to indicate the effect of this adjustment.

Generally, it is noted that the options 1 may be provided on any interface of the electric vehicle 10 including an infotainment or multimedia system, e.g., on a central display. The options 1 can include indications how long the battery will last in the idle case, state o situation. This indication can include or consider a distance or route to the closest charging station, in particular in terms of the energy required to reach the destination. The indication may for example be in the form of a time and/or battery charge that the electric vehicle 10 may be operated under the selectable option 1 in general or until the battery is depleted so far that there is only energy left to reach the destination and all auxiliary systems of the electric vehicle 10 would need to be shut off. The options 1 can generally be different depending on the ambient conditions. For example, in cold ambient conditions, an option 1 can be, in simplified terms, that only the seat heating is operated and no headlights of the exterior vehicle lighting system 70 are operated. Another option 1, in cold ambient conditions, could be that the seat heating is operated, the climate control in the cabin is operated under restrictions and that the headlights are not operated. Yet another option 1, in cold ambient conditions, could be that the full comfort options, including climate control and seat heating, are enabled for the occupants and that the headlights are operated. On the other hand, for hot ambient conditions, the options 1 can look very different. For example, one option 1 could be to enable low or minimum AC settings and not operate the headlights. Another option 1 could be to enable medium AC settings and not operate the headlights. And yet a lost option 1 for selection by the user could be full comfort options and headlights can be operated. All options 1 with their respective settings 2 will influence time of how long the occupants can use them before the energy storage 44 is depleted so far that the electric vehicle 10 can barely reach the next charging station.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 1: option
- 2: setting
- 3: time
- 10: electric vehicle
- 20: data processing system
- 22: processor
- 24: computer program product
- 30: user interface
- 40: electric drive system
- 42: electric motor
- 44: energy storage
- 50: climate control system
- 60: seat heating system
- 70: exterior vehicle lighting system
- 100: method
- 102-110: steps

## Claims

1. A method (100) for controlling energy consumption of an electric vehicle (10) during an idle state of the electric vehicle (10), the method (100) comprising:
- obtaining idle state data indicative of the electric vehicle (10) being in an idle state;
wherein, if the electric vehicle (10) is in an idle state, the method (100) further comprises:
- providing a plurality of options (1) for user selection, each one of the options (1) being indicative of one or more settings (2) for controlling energy consumption of the electric vehicle (10) during the idle state;
- obtaining a user selection of one of the provided options (1); and
- providing control data for controlling the energy consumption of the electric vehicle (10) based on the user selection.

2. The method (100) of claim 1, wherein each one of the options (1) is indicative of a combination of two or more settings (2) for controlling energy consumption of the electric vehicle (10) during the idle state, wherein at least one of two or more settings (2) is different in each one of the options (1).

3. The method (100) of claim 2, wherein each one of the options (1) is indicative of a combination of three or more settings (2) for controlling energy consumption of the electric vehicle (10) during the idle state, wherein at least one of the three or more settings (2) is different in each one of the options (1).

4. The method (100) of claim 2 or 3, wherein, if the electric vehicle (10) is not in an idle state, the method (100) further comprises:
- providing individual settings (2) for controlling energy consumption of the electric vehicle (10).

5. The method (100) of any one of the previous claims, wherein each one of the options (1) is further indicative of a time (3) and/or battery charge the electric vehicle (10) may remain in the idle state when using the one or more settings (2) and reach a charging station for recharging the electric vehicle (10).

6. The method (100) of claim 5, wherein the one or more settings (2) of at least the user selected option (1) are adjustable by the user and the time (3) and/or battery charge indicated by the user selected option (1) is automatically adjusted based on a user adjustment of the one or more settings (2).

7. The method (100) of any one of the previous claims, wherein the one or more settings (2) of each one of the options (1) relate to an operating state of one or more systems of the electric vehicle (10), at least one of the one or more systems being from: a climate control system (50), a seat heating system (60), or an exterior vehicle lighting system (70) of the electric vehicle (10).

8. The method (100) of claim 7, wherein the operating state of the one or more systems is at least from one or more of: an inactive state, a restricted operation state, and an unrestricted operation state, wherein the one or more systems are inactive in the inactive state, are operated with one or more restrictions under the restricted operation state and are operated without restrictions under the unrestricted operation state.

9. The method (100) of any one of the previous claims, wherein each one of the options (1) is based on one or more ambient conditions of the electric vehicle (10), the one or more ambient conditions being at least from: an ambient temperature and ambient light conditions.

10. The method (100) of any one of the previous claims, wherein the idling state is based on at least one or more from: a traffic jam, a breakdown, and an accident.

11. The method (100) of any one of the previous claims, wherein the climate inside a cabin of the electric vehicle (10) is controlled during the idle state.

12. The method (100) of any one of the previous claims, wherein the plurality of options (1) is provided for user input-based selection after obtaining the idle state data for a predetermined time period.

13. Computer program product (24) comprising instructions which, when executed by a computer, cause the computer to carry out the method (100) of any one of the previous claims.

14. A data processing system (20) comprising means for carrying out the method (100) of any one of claims 1 to 12.

15. An electric vehicle (10) comprising the data processing system (20) of claim 14.
